# EUROPÄISCHE PATENTANMELDUNG

(11) **EP 1 132 848 A2**
(43) Veröffentlichungstag der Anmeldung: **12.09.2001**
(21) Anmeldenummer: 01810182.4
(22) Anmeldetag: 21.02.2001
(51) Int. Cl.: G06F 17/60

(54) **Verfahren zur Bewirtschaftung eines Lagerbestandes**

(30) Priorität: 01.03.2000 CH 4002000
(71) Anmelder: Egli, Werner, 8194 Hüntwangen (CH)
(72) Erfinder: Egli, Werner, 8194 Hüntwangen (CH)
(74) Vertreter: Liebetanz, Michael, Dipl.-Phys.

(57) **Zusammenfassung**

Ein Verfahren zur Bewirtschaftung eines Lagerbestandes setzt eine Lagerbestandsfunktion (1) als Abbild des Lagerbestandes für eine vorbestimmte Anzahl von Produkten ein. Diese sind mit einer die Art (5) und Anzahl (15) der Elemente umfassende Funktion (4) verknüpft, die zur Herstellung für ein aus diesen besagten Elementen zusammengesetztes Produkt erforderlich sind. Dabei wird durch eine Auftragseingabe eines Produktes die Lagerbestandsfunktion (1) dieses oder dieser Elemente mindestens um eins dekrementiert und dieses oder diese Elemente werden aus dem Lagerbestand ausgebucht und/oder körperlich entfernt und zur Auslieferung übergeben. Dabei ist ein über die vorbestimmte Anzahl von im Lagerbestand enthaltenen Produkten weiteres endlos vorhandenes Produkt im Lagerbestand vorgesehen, welches bei jeder Auftragseingabe (11) eines Produktes eindeutig diesem Auftrag zugeordnet wird, und körperlich mit dem besagten Produkt oder jedem Element des zusammengesetzten Produktes verbunden wird. Dadurch kann die Funktionalität einer Lagerverwaltung für einen Serienfertiger mit der eines Auftragsfertigers verbunden werden.

## Beschreibung

Die vorliegende Erfindung betrifft ein Verfahren zur Bewirtschaftung eines Lagerbestandes mit einer Lagerbestandsfunktion als Abbild des Lagerbestandes für eine vorbestimmte Anzahl von im Lagerbestand enthaltenen Produkten, mit einer Verknüpfungsfunktion, die die Art und Anzahl der Elemente umfasst, die zur Herstellung für ein aus diesen besagten Elementen zusammengesetztes Produkt erforderlich sind, wobei durch eine Auftragseingabe eines Produktes oder eines zusammengesetzten Produktes die Lagerbestandsfunktion dieses oder dieser Elemente mindestens um eins dekrementiert wird und dieses oder diese Elemente aus dem Lagerbestand ausgebucht und/oder körperlich entfernt und zur Auslieferung übergeben werden.

Ein solches Verfahren ist aus dem Stand der Technik bekannt, um für einen Serienfertiger ein Bewirtschaftungsmodell zur Verfügung zu stellen. Diese Modelle können von unterschiedlicher Art sein. Sie orientieren sich entweder an den Verbräuchen in der Vergangenheit (stochastische Modelle) oder an den Erwartungen für die Zukunft, sogenannte Programmpläne (deterministische Modelle). In jedem Fall erfolgt der Zugriff auf die Daten der Fabrikationsartikel ohne bestehende Verknüpfung zum Kundenauftrag. Es wird in der Software denkmodellmässig stets davon ausgegangen, dass alle Parameter auf den Seriefertigungsartikeln derart geeignet hinterlegt sind, dass jederzeit automatisch genügend Ware am Fertiglager für die hereinkommenden Kundenaufträge vorhanden sei. In der Praxis hat sich aber gezeigt, dass diese Annahme vor allem bei steigenden Kundenumsätzen oder zunehmender Komplexität von Kettenaufträgen in steigendem Masse unrichtig wird. Hierdurch entsteht eine Nichtlieferfähigkeit mit Zusatzkosten.

Ausserdem besteht das Problem der Kundenauftragsüberwachung und der Kundenauftragsterminierung, da besonders bei Auftragsfertiger-Software für den Mischfertiger in der Regel sowohl die Parameter wie auch die notwendigen Algorithmen zur Kundenterminierung des geplanten Zuganges von seriengefertigten Erzeugnissen fehlen. Als Beispiel hierfür wird die Software PSI-PENTA Release 4.01 genannt.

Software für den Auftragsfertiger hat bekannterweise unter anderem das spezifische Merkmal, dass bei der Anlage und anschliessender Freigabe eines Kundenauftrages durch das System automatisch ein Fertigungsauftrag vorgeschlagen wird. Durch die bestehende direkte Verknüpfung in der Software zwischen Kundenauftrag und Fertigungsauftrag kann der Kundenauftrag entsprechend den, dem Fertigungsauftrag hinterlegten Daten und entsprechend dem Arbeitsfortschritt, auf einfache Weise sowohl terminiert, terminlich bestätigt, laufend überwacht und anschliessend ausgeliefert werden. Hat der Kunde in einem verketteten Auftrag mehrere verschiedene Artikel zur Fabrikation bestellt, kann beim Lagerzugang an das Fertigwarenlager des ersten hergestellten Artikels, dieser auf Grund der bestehenden Verknüpfung ohne weiteres buchhalterisch reserviert bleiben, bis alle bestellten Artikel über die Fertigungsaufträge auf diesen Kundenauftrag hergestellt und für den Versand bereitgestellt sind. Die Reservation ist deshalb von Bedeutung, weil in der Regel gleichzeitig mehrere verkettete Kundenaufträge im Auftrag sind und deshalb bei gleichen Einzelartikeln die Gefahr besteht, dass die im Fertiglager befindlichen Artikel inzwischen an einen anderen Kunden verkauft wurden, so dass bei Fertigstellung des letzten Artikels eines Kettenauftrages einer oder mehrere der früher hergestellten, zugehörigen Artikel nicht mehr vorhanden sind und somit aufwendig nachgefertigt werden muss, was wiederum Terminverspätung des Gesamtauftrages zur Folge hat. Einzelne dieser Softwarepakete für Auftragsfertiger lösen das Problem der Reservation deshalb über ein spezielles Versandlager, was aber den Nachteil höheren Buchungsaufwandes durch Umbuchen vom Fertigwarenlager ins Versandlager und mehr Raum und damit höhere Kosten zur Folge hat.

Es wird deshalb von der einschlägigen Softwareindustrie empfohlen, entweder nur kundenauftragsspezifische Erzeugnisse im System anzulegen oder dann entsprechend Individualprogramme, zugeschnitten auf die spezifischen Merkmale des Kunden programmieren zu lassen, was aber mit hohen Programmierkosten und entsprechendem Zeitverlust im Projektfortschritt bei der Software-Einführung verbunden ist.

Ausgehend von diesem Stand der Technik liegt der Erfindung die Aufgabe zugrunde, ein organisatorisches Verfahren anzugeben, mit welchem beispielsweise Standard-Industriesoftware für den Auftragsfertiger auf einfache Weise und ohne grösseren Programmieraufwand, als Industriesoftware für den Seriefertiger eingesetzt werden kann.

Diese Aufgabe wird erfindungsgemäss dadurch gelöst, dass ein über die vorbestimmte Anzahl von im Lagerbestand enthaltenen Produkten weiteres endlos vorhandenes Produkt im Lagerbestand vorgesehen ist, welches bei jeder Auftragseingabe eines Produktes eindeutig diesem Auftrag zugeordnet wird, und körperlich mit dem besagten Produkt oder jedem Element des zusammengesetzten Produktes verbunden wird.

Das erfundene Verfahren weist das Merkmal auf, dass die Stücklistenstruktur des Serieproduktes eines Mischfertigers auf einfache Weise mit einer zusätzlichen Strukturstufe ergänzt wird, welche das fertige Enderzeugnis und ein einziges Zugabeelement, beispielsweise die Produktetikette, enthält.

Dieses Zugabeelement, beispielsweise die Produktetikette, wird über einen mit dem Kundenauftrag direkt verknüpften Fertigungskurzauftrag auf das am Lager liegende nicht etikettierte, anonyme Erzeugnis bei der Entnahme aufgeklebt, wodurch das Erzeugnis kundenspezifischer Lagerartikel wird und damit eine direkte Verknüpfung zum Kundenauftrag erhält. Hierdurch können alle nötigen oben beschriebenen Funktionalitäten auf der Standard-Software wie bei einem auftragsgefertigten Erzeugnis ohne weiteren Programmierungsaufwand durchgeführt werden. Ist ein Versandlager vorgesehen, so wird der erzeugte kundenspezifische Fertigungsauftrag direkt an das Versandlager abgemeldet, wodurch das aufwendige Umbuchen entfällt und automatisch die gewünschte Reservation entsteht.

Bei Anwendung dieses Verfahrens entsteht der grosse Vorteil, dass der Mischfertiger (Auftrags- und Seriefertigung gleichzeitig) mit der Funktionalität der Auftragsfertigersoftware auch seine Serieprodukte abwickeln kann und nicht zwei verschiedene Softwarepakete einsetzen muss, was nicht zur enormen Investitionsaufwand einspart sondern auch organisatorisch viel einfacher gehandhabt werden kann.

Ein weiterer Vorteil entsteht, indem durch Herstellung einer leicht zu bewerkstelligenden Schnittstelle zwischen Auftragsfertigersoftware und einem handelsüblichen Etikettendruckprogramm, die Etikette automatisch im Lager beispielsweise als Werkstattauftragspapier gedruckt und zusätzlich mit kundenspezifischen Daten (Kundenlagernummer, Barcode des Kunden) ergänzt werden kann.

Die Erfindung wird nun unter Bezugnahme auf die beigefügten Zeichnungen beschrieben. Es zeigen:
- Fig. 1: ein Blockschaltbild eines Verfahrens gemäss der Erfindung, und
- Fig. 2: ein schematische Darstellung des Lagers und seines Bestandes im Zusammenhang mit der Fig. 1.

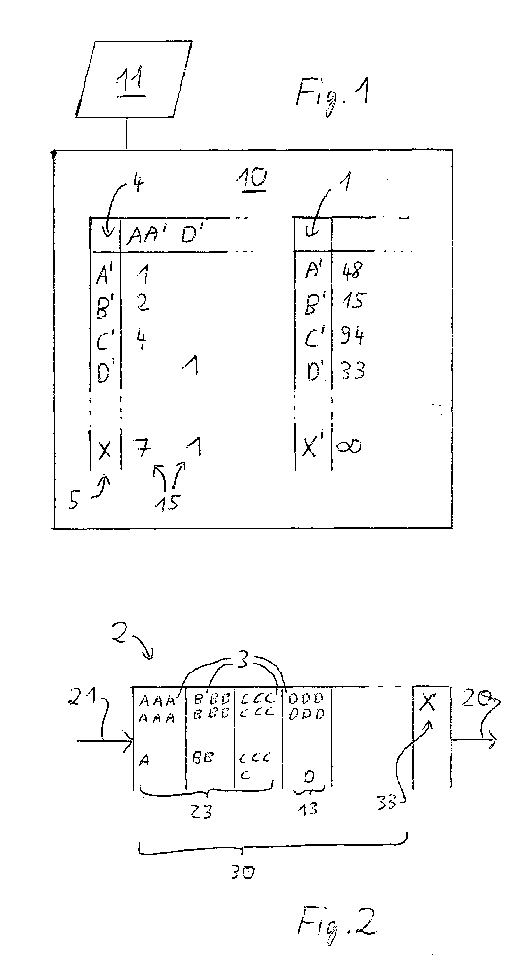

Die Fig. 1 zeigt ein Blockschaltbild einer Vorrichtung zur Durchführung des Verfahrens zur Bewirtschaftung eines Lagerbestandes. Mit dem Bezugszeichen 10 ist ein Hostrechner bezeichnet, der insbesondere Speicherelemente umfasst, in denen eine Lagerbestandsfunktion 1 als Abbild des Lagerbestandes 2 für eine vorbestimmte Anzahl von im Lagerbestand 2 enthaltenen Produkten 3 abgelegt ist. Der tatsächlich bestehende Lagerbestand 2 ist in der Fig. 2 dargestellt, wobei die Kästen 3 jeweils einzeln seriengefertigte Erzeugnisse sind. Dies können selbst Endprodukte 13 oder aus mehreren Produkten 3 bestehende Halbfertigprodukte 23 sein, die als zusammengehörige Lieferung abgegeben werden.

Dabei sind die Produkte in den Fig. 1 und 2 beispielsweise mit den Buchstaben A, B, C, D, E für die tatsächlichen körperlichen Produkte und mit den Buchstaben A', B', C', D', E' für die Lagerbestandsfunktion 1 bezeichnet. Dabei enthält die Lagerbestandsfunktion 1 eine Verknüpfungsfunktion 4, die die Art 5 (hier als Beispiel die Elemente mit den Bezeichnungen A', B' und C' bilden ein Endprodukt AA') und die Anzahl 15 (hier die Zahlen 1, 2 und 4) der Elemente umfasst, die zur Herstellung für ein aus diesen besagten Elementen zusammengesetztes Produkt 23 erforderlich sind. Daneben umfasst die Verknüpfungsfunktion 4 auch eineindeutige Verknüpfungen wie für das Produkt D', welches das Endprodukt D' selber bildet, welches im in der Fig. 2 dargestellten Lager mit dem Bezugszeichen 13 versehen ist.

Über ein Endgerät 11, wie beispielsweise eine Computertastatur oder ein Handgerät, welches Daten mit dem Hostrechner 10 austauschen kann, wird ein Produkt 23 (hier ein zusammengesetztes Produkt aus einem Element A, zwei Elementen B und vier Elementen C) als verkauft gebucht. Damit wird die Lagerbestandsfunktion 1 dieser Elemente um 1, 2 bzw. 4 dekrementiert wird und diese Elemente aus dem Lagerbestand ausgebucht. Sie können auch tatsächlich physikalisch aus dem Lagerbestand 2 entfernt und zur Auslieferung 20 übergeben werden.

Dieses nach dem Stand der Technik arbeitende Verfahren arbeitet zufriedenstellend, so lange ein stetiger Zufluss 21 von Elementen 3 den Lagerbestand 2 nicht auf Null sinken lässt. Dies ist modellgemäss anzunehmen und die Produkte 13, 23 verlassen das Lager 2 bei der Serienfertigung. Bei der Auftragsfertigung, bei der im Prinzip eine Reservation für einen zukünftigen Termin vorgenommen wird, ist es aber notwendig, dass diese Elemente den Lagerbestand 2 in ein Versandlager verlassen 20, was aufwendig ist, oder sie müssen im Rechner 10 in eine anderen Datenbank umgebucht werden. Dies erfordert eine kundenspezifische Anpassung des Verfahrens.

Erfindungsgemäss wird zu jedem Produkt, entweder bestehend aus einem einzigen Produkt 13 oder aus einer Gruppe von Produkten 23 (A, B, C) ein weiteres Element 33 (hier mit dem Bezugszeichen X bzw. X' bezeichnet) verknüpft, welches automatisch bei jedem Produkt 13 oder 23 erzeugt und mit dem Auftrag verknüpft wird. Dabei wird jedes einzelne Element 3 mit einem Element 33 verbunden, vorteilhafterweise körperlich mit einer Klebeetikette, die die Daten des Kundenauftrages aufnimmt.

Somit können bei einem Versandlager bestellte Artikel ohne weiteres Umbuchen direkt abgegeben 20 werden, und erfordern keine weitere datenbanktechnische Behandlung. Durch diese Vorgehensweise ist jedes bestehende Datenbankpaket für die Auftragsfertigung ohne weitere Programmierarbeiten für die Serienfertigung einsetzbar, da aus dem Lager nur noch die Elemente entnommen werden, die tatsächlich frei sind und nicht für einen Kundenauftrag reserviert sind.

## Patentansprüche

1. Verfahren zur Bewirtschaftung eines Lagerbestandes (2) mit einer Lagerbestandsfunktion (1) als Abbild des Lagerbestandes (2) für eine vorbestimmte Anzahl (30) von im Lagerbestand (2) enthaltenen Produkten (13, 23), mit einer Verknüpfungsfunktion (4), die die Art (5) und Anzahl (15) der Elemente (3) umfasst, die zur Herstellung für ein aus diesen besagten Elementen (3) zusammengesetztes Produkt (13, 23) erforderlich sind, wobei durch eine Auftragseingabe (11) eines Produktes (13) oder eines zusammengesetzten Produktes (23) die Lagerbestandsfunktion (1) dieses oder dieser Elemente (3) mindestens um eins dekrementiert wird und dieses oder diese Elemente (3) aus dem Lagerbestand (2) ausgebucht und/oder körperlich entfernt und zur Auslieferung übergeben werden (20), **dadurch gekennzeichnet**, dass ein über die vorbestimmte Anzahl (30) von im Lagerbestand (2) enthaltenen Produkten (3) weiteres endlos vorhandenes Produkt (33) im Lagerbestand (2) vorgesehen ist, welches bei jeder Auftragseingabe (11) eines Produktes (13, 23) eindeutig diesem Auftrag zugeordnet wird, und körperlich mit dem besagten Produkt (13) oder jedem Element (3) des zusammengesetzten Produktes (23) verbunden wird.

2. Verfahren nach Anspruch 1, **dadurch gekennzeichnet**, dass das zusätzliche Produkt (33) ein Stücklistenzusatz ist, welcher das Serieerzeugnis und ein Zugabeelement enthält.

3. Verfahren nach Anspruch 2, **dadurch gekennzeichnet**, dass das Zugabeelement kundenauftragsspezifische Ausprägungen aufweist.

4. Verfahren nach Anspruch 2 oder 3, **dadurch gekennzeichnet**, dass das Zugabeelement eine Produktetikette ist.

5. Verfahren nach Anspruch 4, **dadurch gekennzeichnet**, dass die Produktetikette aufklebbar ist und ein Werkstattpapier für den Werkstattauftrag ist.

6. Verfahren nach einem der Ansprüche 1 bis 5, **dadurch gekennzeichnet**, dass das Produkt (13, 23) mit dem Zugabeelement (33) zusammen direkt in ein Versandlager zur Reservation eingebucht (20) wird.
